# EUROPÄISCHE PATENTANMELDUNG

(11) **EP 4 736 717 A2**
(43) Veröffentlichungstag der Anmeldung: **06.05.2026**
(21) Anmeldenummer: 25224851.3
(22) Anmeldetag: 13.09.2023
(51) Int. Cl.: A47J 43/07

(54) **GEFÄSSANORDNUNG FÜR EIN KÜCHENGERÄT, VERFAHREN ZUM BETREIBEN EINER GEFÄSSANORDNUNG UND MASCHINENLESBARES SPEICHERMEDIUM**

(62) Teilanmeldung aus: 23197163.1
(71) Anmelder: Vorwerk & Co. Interholding GmbH, 42275 Wuppertal (DE)
(72) Erfinder: Wahle, Volker, 46499 Hamminkeln (DE); Cornelißen, Markus, 53332 Bornheim (DE)
(74) Vertreter: Cohausz & Florack

(57) **Zusammenfassung**

Gefäßanordnung (100, 200, 300) für ein Küchengerät (302), aufweisend: ein erstes Bauteil (102, 202, 304) mit mindestens einem magnetfeldbasierten Sensorelement (104, 106, 204, 316, 400), ein zweites Bauteil (108, 206, 306) mit mindestens einem magnetfeldbasierten Gegenelement (110, 112, 208, 318), und eine Auswertungseinrichtung (114, 214, 314), wobei das erste Bauteil (102, 202, 304) und das zweite Bauteil (108, 206, 306) zusammen einen Aufnahmeraum (116, 210) mit einem Aufnahmevolumen (118, 212) bilden, die dadurch gekennzeichnet ist, dass das mindestens eine magnetfeldbasierte Sensorelement (104, 106, 204, 316, 400) dazu eingerichtet ist, ein Magnetfeld des mindestens einen magnetfeldbasierten Gegenelements (110, 112, 208, 318) zu erfassen und mindestens eine Angabe für das erfasste Magnetfeld auszugeben, dass die Auswertungseinrichtung (114, 214, 314) dazu eingerichtet ist, auf der Grundlage der mindestens einen für das erfasste Magnetfeld ausgegebenen Angabe eine Information über eine Position (M1, M2, M3, M4) des mindestens einen magnetfeldbasierten Gegenelements (110, 112, 208, 318) relativ zum mindestens einen magnetfeldbasierten Sensorelement (104, 106, 204, 316, 400) zu bestimmen, und dass die Auswertungseinrichtung (114, 214, 314) dazu eingerichtet ist, auf der Grundlage der Information über eine Position (M1, M2, M3, M4) des mindestens einen magnetfeldbasierten Gegenelements (110, 112, 208, 318) relativ zum mindestens einen magnetfeldbasierten Sensorelement (104, 106, 204, 316, 400) eine Information über eine Änderung des Aufnahmevolumens (118, 212) zu bestimmen.

## Beschreibung

Die vorliegende Offenbarung betrifft eine Gefäßanordnung für ein Küchengerät, aufweisend: ein erstes Bauteil mit mindestens einem magnetfeldbasierten Sensorelement, ein zweites Bauteil mit mindestens einem magnetfeldbasierten Gegenelement, und eine Auswertungseinrichtung, wobei das erste Bauteil und das zweite Bauteil zusammen einen Aufnahmeraum mit einem Aufnahmevolumen bilden. Weiter offenbart sind ein Verfahren zum Betreiben einer Gefäßanordnung für ein Küchengerät und ein maschinenlesbares Speichermedium mit
Programmanweisungen.

Aus dem Stand der Technik sind Küchengeräte bekannt, die zum zumindest teilautomatischen Zubereiten von Speisen eingerichtet sind. Derartige Küchengeräte können mindestens eine Gefäßanordnung und ein Grundgerät aufweisen. Optional können auch separate Bauteile oder Zubehörteile vorgesehen sein, die mit der Gefäßanordnung und / oder mit dem Grundgerät zusammenwirken, um je nach erzieltem Gericht, Getränk oder Ähnliches ein Lebensmittel zu verarbeiten. Bauteile der Gefäßanordnung oder separate Zubehörteile werden in der Regel durch Küchengeräteanbieter beispielsweise als Kochgefäß, Gargefäß, Deckel, Schneide- oder Rühreinheit oder Ähnliches angeboten. Im Allgemeinen können das Grundgerät oder Bauteile der Gefäßanordnung jeweils miteinander kompatible Schnittstellen aufweisen, die ein Zusammenwirken ermöglichen. Insbesondere kann durch miteinander in Zusammenwirkung gebrachten Schnittstellen ein Antrieb eines beweglichen Elements der Gefäßanordnung oder eines Zubehörteils durch einen in dem Grundgerät angeordneten Elektromotor erfolgen.

Eine Gefäßanordnung kann ein Speiseaufnahmeelement, beispielsweise in Form eines Topfs, und mindestens ein Deckelelement umfassen. Das Deckelelement ist vorzugsweise dazu eingerichtet, das Speiseaufnahmeelement zumindest teilweise zu verschließen bzw. abzudecken.

Beim Einsetzen bekannter Küchengeräte kann es einem Nutzer unter bestimmten Umständen, beispielsweise beim Verstopfen von mindestens einer Öffnung im Deckelement, gelingen, einen Druck im durch das Deckelelement abgedeckten Speiseaufnahmeelement aufzubauen. Dies könnte zu einem unkorreliertem Flüssigkeitsaustritt führen. Außerdem könnte durch eine hohe Motordrehzahl sich ein Druck bilden, beispielsweise durch Entstehen einer sogenannten Trombe, welcher Druck zur Verschiebung des Deckels führen kann. Alternativ kann es während der Küchengerätenutzung bei hohen Drehzahlen zu einer Deckelanhebung kommen.

Vor diesem Hintergrund liegt der vorliegenden Erfindung die Aufgabe zu Grunde, bekannte Gefäßanordnungen für ein Küchengerät zu verbessern, und insbesondere eine Gefäßanordnung für ein Küchengerät mit erhöhter Nutzerfreundlichkeit anzubieten.

Die zuvor genannte Aufgabe wird erfindungsgemäß gelöst durch eine Gefäßanordnung für ein Küchengerät, aufweisend: ein erstes Bauteil mit mindestens einem magnetfeldbasierten Sensorelement, ein zweites Bauteil mit mindestens einem magnetfeldbasierten Gegenelement, und eine Auswertungseinrichtung, wobei das erste Bauteil und das zweite Bauteil zusammen einen Aufnahmeraum mit einem Aufnahmevolumen bilden, dadurch gelöst, dass das mindestens eine magnetfeldbasierte Sensorelement dazu eingerichtet ist, ein Magnetfeld des mindestens einen magnetfeldbasierten Gegenelements zu erfassen und mindestens eine Angabe für das erfasste Magnetfeld auszugeben, dass die Auswertungseinrichtung dazu eingerichtet ist, auf der Grundlage der mindestens einen für das erfasste Magnetfeld ausgegebenen Angabe eine Information über eine Position des mindestens einen magnetfeldbasierten Gegenelements relativ zum mindestens einen magnetfeldbasierten Sensorelement zu bestimmen, und dass die Auswertungseinrichtung dazu eingerichtet ist, auf der Grundlage der Information über eine Position des mindestens einen magnetfeldbasierten Gegenelements relativ zum mindestens einen magnetfeldbasierten Sensorelement eine Information über eine Änderung des Aufnahmevolumens zu bestimmen.

Die zuvor genannte Aufgabe wird erfindungsgemäß weiterhin gelöst durch ein Verfahren zum Betreiben einer Gefäßanordnung für ein Küchengerät, insbesondere einer Gefäßanordnung für ein Küchengerät nach der vorliegenden Offenbarung, bei dem ein Magnetfeld mindestens eines an einem zweiten Bauteil der Gefäßanordnung vorgesehenen magnetfeldbasierten Gegenelements durch mindestens ein an einem ersten Bauteil der Gefäßanordnung vorgesehenen magnetfeldbasiertes Sensorelement erfasst wird, bei dem für das erfasste Magnetfeld mindestens eine Angabe für das erfasste Magnetfeld ausgegeben wird, bei dem eine Information über eine Position des mindestens einen magnetfeldbasierten Gegenelements relativ zum mindestens einen magnetfeldbasierten Sensorelement auf der Grundlage der mindestens einen für das erfasste Magnetfeld ausgegebenen Angabe bestimmt wird, und bei dem eine Information über eine Änderung eines durch das erste Bauteil und das zweite Bauteil ausgebildeten Aufnahmevolumens auf der Grundlage der Information über eine Position des mindestens einen magnetfeldbasierten Gegenelements relativ zum mindestens einen magnetfeldbasierten Sensorelement bestimmt wird.

Die zuvor genannte Aufgabe wird erfindungsgemäß weiterhin gelöst durch ein maschinenlesbares Speichermedium mit Programmanweisungen, die, wenn sie durch einen Prozessor einer Gefäßanordnung für ein Küchengerät, insbesondere einer Gefäßanordnung nach der vorliegenden Offenbarung, oder durch den Prozessor eines Küchengeräts mit einer Gefäßanordnung nach ach der vorliegenden Offenbarung ausgeführt werden, die Gefäßanordnung oder das Küchengerät dazu veranlassen, ein Verfahren nach der vorliegenden Offenbarung durchzuführen.

Im Falle eines Druckaufbaus in dem Aufnahmeraum werden das erste Bauteil und das zweite Bauteil auseinander gedrückt, was wiederum zu einer Verschiebung der Bauteile gegenübereinander und / oder zu einer Ausdehnung des Materials der Bauteile führen kann. Eine derartige Verschiebung oder Ausdehnung kann eine Änderung des Aufnahmevolumens zur Folge haben. Mit der vorliegend offenbarten Gefäßaufnahme, Verfahren und computerlesbarem Speichermedium kann eine Änderung des Aufnahmevolumens durch Bestimmen einer Position der Bauteile relativ zueinander festgestellt werden, und von der festgestellten Änderung des Aufnahmevolumens dann auf einen Druckaufbau zurückgeschlossen werden.

Insgesamt kann somit ein Druck- oder Trombenaufbau in dem Aufnahmeraum in Form eines Deckelhubs oder Deckelverformung erkannt werden und diese entsprechende Information zum automatischen Einleiten von Gegenmaßnahmen verwendet werden.

Das erste Bauteil kann ein Speiseaufnahmeelement sein, beispielsweise mit einer Öffnung zur Aufnahme von Lebensmitteln, mit einer Öffnung zur Aufnahme einer Schneideeinheit und mit einem Griff. Das zweite Bauteil kann ein Abdeckungselement sein, das zur Abdeckung der Öffnung zur Aufnahme von Lebensmitteln des Speiseaufnahmeelements ausgebildet ist. Dabei kann das zweite Bauteil eine oder mehrere Luftdurchlassöffnung aufweisen.

Das erste Bauteil und das zweite Bauteil bilden zusammen einen Aufnahmeraum mit einem Aufnahmevolumen. Der Aufnahmeraum kann sich zur luftdurchlässigen Aufnahme von Lebensmitteln eignen. Dabei kann die Luftdurchlässigkeit des Aufnahmeraumes insbesondere auf eine oder mehrere Lüftungsöffnungen des zweiten Bauteils zurückzuführen sein.

Das erste Bauteil und das zweite Bauteil sind vorzugsweise derart ausgebildet, dass diese in mindestens einer Aufbauposition miteinander montiert werden können, beispielsweise indem das zweite Bauteil eine Öffnung des ersten Bauteils abdeckt, und somit den Aufnahmeraum mit dem Aufnahmevolumen im Sinne der vorliegenden Offenbarung bildet. Das erste Bauteil und das zweite Bauteil können ferner derart ausgebildet sein, dass diese eine geöffnete Position annehmen können, wobei in der geöffneten Position das erste Bauteil und das zweite Bauteil einen Aufnahmeraum mit einem nahezu unendlichen Aufnahmevolumen bilden.

Das mindestens eine magnetfeldbasierte Gegenelement ist vorzugsweise zum Erzeugen eines Magnetfeldes ausgebildet, beispielsweise aufgrund von innewohnenden Materialeigenschaften oder durch Anwendung eines elektrischen Stroms. Beispiele für das mindestens eine magnetfeldbasierte Gegenelement sind: Magnet, Dauermagnet, Elektromagnet, Spule, wobei diese Liste nicht abschließend ist.

Das mindestens eine magnetfeldbasierte Sensorelement ist vorzugsweise für das Magnetfeld empfindlich. Ein Beispiel für das mindestens eine magnetfeldbasierte Sensorelement ist ein Hall-Sensor, mit dem der Einfluss einer Lorenzkraft von einem Magnetfeld auf ein in dem Sensor fließender Strom bzw. eine Hall-Spannung erfasst und auf der Grundlage deren eine magnetische Flussdichte ausgegeben werden kann. Ein besonderes Beispiel für das mindestens eine magnetfeldbasierte Sensorelement ist ein 3D-Hall-Sensor, der dazu eingerichtet ist, Komponente der magnetischen Flussdichte eines Magnetfelds in drei Raumrichtungen auszugeben. Vorzugsweise weist das mindestens eine magnetfeldbasierte Sensorelement Mittel zur Übertragung von Daten auf die Auswertungseinrichtung, insbesondere zur Ausgabe der Angabe für das erfasste Magnetfeld an die Auswertungseinrichtung auf.

Am ersten Bauteil kann ein einzelnes magnetfeldbasiertes Sensorelement oder eine Mehrzahl von magnetfeldbasierten Sensorelementen vorgesehen sein. Durch Vorsehen eines einzelnen magnetfeldbasierten Sensorelements kann die Gefäßanordnung, insbesondere das erste Bauteil, kostengünstig ausgebildet sein und die Auswertung der Sensordaten dann einfach gehalten werden. Das Vorsehen einer Mehrzahl von magnetfeldbasierten Sensorelementen, beispielsweise von zwei magnetfeldbasierten Sensorelementen, ermöglicht eine erhöhte Messgenauigkeit und gegebenenfalls durch Redundanz ein gegenseitiges Ausschließen von Erfassungsfehlern.

Am zweiten Bauteil kann ein einzelnes magnetfeldbasiertes Gegenelement oder eine Mehrzahl von magnetfeldbasierten Gegenelementen vorgesehen sein. Durch Vorsehen eines einzelnen magnetfeldbasierten Gegenelements kann die Gefäßanordnung, insbesondere das zweite Bauteil, kostengünstig ausgebildet sein und die Erfassung bzw. Auswertung der entsprechenden Sensordaten dann einfach gehalten werden. Das Vorsehen einer Mehrzahl von magnetfeldbasierten Gegenelementen, beispielsweise von zwei magnetfeldbasierten Gegenelementen, ermöglicht eine erhöhte Genauigkeit bei der Bestimmung der Position des zweiten Bauteils.

Das mindestens eine magnetfeldbasierte Sensorelement kann dazu eingerichtet sein, überlappende Magnetfelder zu erfassen, wobei jedes Magnetfeld durch ein magnetfeldbasiertes Gegenelement erzeugt ist. Alternativ oder zusätzlich können Paare vorgesehen sein, wobei jedes Paar ein magnetfeldbasiertes Sensorelement und ein magnetfeldbasiertes Gegenelement aufweist, und wobei das magnetfeldbasiertes Sensorelement eines Paares das Magnetfeld des magnetfeldbasierten Gegenelements erfasst.

Die Auswertungseinrichtung weist vorzugsweise einen Prozessor mit einem Speichermedium auf. Insbesondere kann ein Computerprogramm mit Befehlen auf dem Speichermedium gespeichert sein, deren Ausführung durch den Prozessor die Durchführung eines Betriebsverfahrens durch die Gefäßanordnung bewirkt. Die Auswertungseinrichtung kann am ersten Bauteil der Gefäßanordnung angeordnet sein. Wenn die Gefäßanordnung in Zusammenhang mit einem Grundgerät eines Küchengeräts eingesetzt ist, kann die Auswertungseinrichtung am Grundgerät des Küchengeräts angeordnet sein, wobei die Auswertungseinrichtung dann Teil einer Steuerungseinrichtung des Küchengeräts sein kann.

Die mindestens eine durch das mindestens eine magnetfeldbasierte Sensorelement ausgegebene Angabe für das erfasste Magnetfeld kann insbesondere eine magnetische Flussdichte sein.

Im Folgenden werden verschiedene Ausführungsformen der Gefäßanordnung, des Verfahrens und des maschinenlesbaren Speichermediums beschrieben, wobei die einzelnen Ausführungsformen jeweils unabhängig voneinander für die Gefäßanordnung, das Verfahren und das maschinenlesbare Speichermedium gelten. Darüber hinaus können die einzelnen Ausführungsformen beliebig miteinander kombiniert werden.

Bei einer Ausführungsform der Gefäßanordnung ist vorgesehen, dass die Information über eine Änderung des Aufnahmevolumens einer Änderung der Position des mindestens einen magnetfeldbasierten Gegenelements relativ zum mindestens einen magnetfeldbasierten Sensorelement entspricht, wobei die Änderung der Position des mindestens einen magnetfeldbasierten Gegenelements relativ zum mindestens einen magnetfeldbasierten Sensorelement das Ergebnis einer translatorischen Bewegung, einer Rotationsbewegung oder einer Kombination hiervon ist.

Bei einer entsprechenden Ausführungsform des Verfahrens ist vorgesehen, dass die Information über eine Änderung des Aufnahmevolumens einer Änderung der Position des mindestens einen magnetfeldbasierten Gegenelements relativ zum mindestens einen magnetfeldbasierten Sensorelement entspricht, wobei die Änderung der Position des mindestens einen magnetfeldbasierten Gegenelements relativ zum mindestens einen magnetfeldbasierten Sensorelement das Ergebnis einer translatorischen Bewegung, einer Rotationsbewegung oder einer Kombination hiervon ist.

Somit kann eine erweiterte Vielfalt an Bewegungen des mindestens einen magnetfeldbasierten Gegenelements bzw. des zweiten Bauteils erkannt werden. Beispiele für eine Ursache der Änderung der Position des mindestens einen magnetfeldbasierten Gegenelements relativ zum mindestens einen magnetfeldbasierten Sensorelement sind: Materialverformung des zweiten Bauteils, Materialverformung des ersten Bauteils, Verschiebung des zweiten Bauteils gegenüber dem ersten Bauteil, Öffnung des Aufnahmeraums, Anbringen bzw. Ansetzen des zweiten Bauteils am ersten Bauteil, oder Weiteres.

Hierzu kann das magnetfeldbasierte Sensorelement dazu ausgebildet sein, eine derartige mindestens eine Angabe über das erfasste Magnetfeld auszugeben, dass die Auswertungseinrichtung auf einer Positionsänderung des magnetfeldbasierten Gegenelements entlang der Vertikale zurückschließen kann. In einem konkreten Fall, bei dem ein Abnehmen des zweiten Bauteils von dem ersten Bauteil durch eine horizontale Verschiebung zur Entriegelung eingeschränkt ist, kann somit zwischen einer auftretenden Kraft in dem Aufnahmevolumen, der dann eine vertikale Verschiebung des magnetfeldbasierten Gegenelement bewirkt, und einer bestimmungsgemäßen Abnahme des zweiten Bauteils, die aufgrund der besonderen Verriegelung einer horizontalen Verschiebung des magnetfeldbasierten Gegenelement herbeiführt, unterschieden werden.

Weiter kann das zweite Bauteil derart ausgebildet sein, dass es mindestens einen Biegungsbereich aufweist, wobei der Biegungsbereich dazu vorgesehen ist, sich bei einer erhöhten Krafteinwirkung gegen das Bauteil oder einer erhöhten Temperatur gegenüber weiteren Bereichen des zweiten Bauteils zu verformen. Hierzu kann der Biegungsbereich beispielsweise eine im Vergleich zu weiteren Bereichen des zweiten Bauteils geringere Dicke aufweisen. Alternativ oder zusätzlich kann der Biegungsbereich eine im Vergleich zu weiteren Bereichen des zweiten Bauteils unterschiedliche Materialzusammensetzung aufweisen.

Bei einer Ausführungsform der Gefäßanordnung ist vorgesehen, dass die Auswertungseinrichtung dazu eingerichtet ist, die Information über eine Position des mindestens einen magnetfeldbasierten Gegenelements relativ zum mindestens einen magnetfeldbasierten Sensorelement mit einer Referenzposition zu vergleichen, und dass die Auswertungseinrichtung dazu eingerichtet ist, die Information über eine Änderung des Aufnahmevolumens auf der Grundlage des Vergleichs zu bestimmen.

Dadurch kann eine Änderung der Position des mindestens einen magnetfeldbasierten Gegenelements relativ zum mindestens einen magnetfeldbasierten Sensorelement im Vergleich zur Referenzposition bestimmt werden. Die Referenzposition kann seitens des Herstellers der Gefäßanordnung festgelegt werden bzw. gespeichert sein. Alternativ oder zusätzlich kann eine Referenzposition aus einem Server abgerufen und aktualisiert werden. Eine weitere Variante besteht darin, die Referenzposition an der Gefäßanordnung neu zu bestimmen, beispielsweise bei einer neuen Verwendung der Gefäßanordnung.

Vorzugsweise ist die Referenzposition in einem Koordinatensystem des magnetfeldbasierten Sensorelements definiert, wobei die Position des Sensorelements als Nullposition gilt.

Bei einer Ausführungsform der Gefäßanordnung ist vorgesehen, dass die Referenzposition auf der Grundlage einer früheren Erfassung des Magnetfeldes des mindestens einen magnetfeldbasierten Gegenelements bestimmt worden ist.

Somit kann die Referenzposition für die Gefäßanordnung individuell zutreffend festgelegt werden. Dadurch können beispielsweise Alterungseffekte oder Defekte des Sensorelements ausgeglichen werden. Gleichermaßen können Materialveränderungen der Bauteile der Gefäßanordnung im Laufe des Lebenszyklus der Gefäßanordnung ausgeglichen werden. Weiter vorteilhaft ist die Möglichkeit, mit einer Aktualisierung der Referenzposition neue Zulässigkeitsbedingungen oder Toleranzangaben für die zu erfassende Position des mindestens einen magnetfeldbasierten Gegenelements relativ zum mindestens einen magnetfeldbasierten Sensorelement neu zu definieren.

Eine Toleranzangabe kann einen maximalen Wert für eine Winkelposition des mindestens einem magnetfeldbasierten Gegenelements gegenüber dem mindestens einen magnetfeldbasierten Sensorelement aufweisen. Auf diese Art kann bestimmt werden, dass für die erfasste Winkelposition mit einem Betrag, der diesem maximalmen Wert überschreitet, das zweite Bauteil mit dem magnetfeldbasierten Gegenelement vom ersten Bauteil abmontiert ist. Beispielsweise, wenn ein Abdeckungselement von einem Speiseaufnahmeelement abgenommen ist und somit der Aufnahmeraum geöffnet ist.

Die frühere Erfassung kann beispielsweise im Rahmen eines Referenzierungsvorgangs, in dem gezielt eine Erfassung zur Feststellung einer Referenzposition durchgeführt wird, oder beim Betreiben der Gefäßanordnung anhand einer laufenden Erfassung des Magnetfeldes des mindestens einen magnetfeldbasierten Gegenelements erfolgen.

Bei einer Ausführungsform der Gefäßanordnung ist vorgesehen, dass das mindestens eine magnetfeldbasierte Sensorelement dazu eingerichtet ist, das Magnetfeld des mindestens einen magnetfeldbasierten Gegenelements zu mindestens zwei Zeitpunkten zu erfassen und für jedes Erfassen eine Angabe für das erfasste Magnetfeld auszugeben, dass die Auswertungseinrichtung dazu eingerichtet ist, für die jeweiligen ausgegebenen Angaben eine Information über eine Position des mindestens einen magnetfeldbasierten Gegenelements relativ zum mindestens einen magnetfeldbasierten Sensorelement zu bestimmen, und dass die Auswertungseinrichtung dazu eingerichtet ist, die Information über eine Änderung des Aufnahmevolumens auf der Grundlage der für die jeweiligen ausgegebenen Angaben bestimmten Informationen über eine Position des mindestens einen magnetfeldbasierten Gegenelements relativ zum mindestens einen magnetfeldbasierten Sensorelement zu bestimmen.

Somit kann eine dynamische Beobachtung der Position des magnetfeldbasierten Gegenelements bzw. des zweiten Bauteils bewerkstelligt werden. Hierzu kann beispielsweise die Information über die Position des mindestens einen magnetfeldbasierten Gegenelements beim ersten Zeitpunkt mit der Information über die Position des mindestens einen magnetfeldbasierten Gegenelements beim zweiten Zeitpunkt verglichen werden, um so gleitend über Erfassungszeitpunkte eine Positionsänderung bzw. eine Änderung des Aufnahmevolumens zu beobachten.

Alternativ kann eine referenzierte Beobachtung der Position des magnetfeldbasierten Gegenelements bzw. des zweiten Bauteils bewerkstelligt werden, indem die Information über die Position des mindestens einen magnetfeldbasierten Gegenelements beim ersten Zeitpunkt gespeichert wird, und jede weitere Information über die Position des mindestens einen magnetfeldbasierten Gegenelements bei einem späteren zweiten Zeitpunkt mit der gespeicherten Information über die Position des mindestens einen magnetfeldbasierten Gegenelements beim ersten Zeitpunkt verglichen werden.

In einem besonderen Beispiel kann das magnetfeldbasierte Sensorelement vor jeder Nutzung z.B. vor einem Misch- oder Kochvorgang mit der Gefäßanordnung referenziert werden, um so vielfältige Toleranzeinflüsse wie Temperatur, Formänderung der Bauteile, Abweichung des Magnetfelds, zu kompensieren und so beispielsweise eine Verschiebung des zweiten Bauteils, beispielsweise in Form eines Deckelhubs, genauer feststellen zu können. Dies kann mit der Verriegelung des Deckels erfolgen.

Bei einer Ausführungsform der Gefäßanordnung ist vorgesehen, dass die Auswertungseinrichtung dazu eingerichtet ist, die mindestens eine ausgegebene Angabe für das erfasste Magnetfeld in eine Erfassungshistorie zu speichern.

Somit kann zunächst eine Erfassungshistorie erzeugt werden, die dann im Rahmen einer Auswertung ggf. als Grundlage zur Feststellung einer Änderung des Aufnahmevolumens dienen kann. Bei einer Langzeit Speicherung der Erfassungshistorie können Ereignisse im Laufe des Lebenszyklus der Gefäßanordnung im Nachhinein ausgewertet und für zukünftige Anwendungen verwendet werden, beispielsweise für eine Berücksichtigung bei einer neuen Festlegung einer Referenzposition.

Bei einer Ausführungsform der Gefäßanordnung ist vorgesehen, dass die Auswertungseinrichtung dazu eingerichtet ist, die für die mindestens eine ausgegebene Angabe bestimmte Information über eine Position des mindestens einen magnetfeldbasierten Gegenelements relativ zum mindestens einen magnetfeldbasierten Sensorelement in eine Positionshistorie zu speichern.

Diese Ausführungsform bietet ähnliche Vorteile wie die zuvor beschriebene Ausführungsform. In dem vorliegenden Fall wurde allerdings ein Auswertungsschritt vor dem Speichern in der Positionshistorie bereits durchgeführt, indem die mindestens eine Information über eine Position des mindestens einen magnetfeldbasierten Gegenelements relativ zum mindestens einen magnetfeldbasierten Sensorelement auf der Grundlage der Angabe für das erfasste Magnetfeld bestimmt worden ist.

Dadurch kann die Positionshistorie für eine erweiterte Auswahl an anschließenden Verwertungen eingesetzt werden, wie zum Beispiel für eine Steuerung der Gefäßanordnung oder eines Küchengeräts, mit dem die Gefäßanordnung kompatibel ist.

Bei einer Ausführungsform der Gefäßanordnung ist vorgesehen, dass die mindestens eine Angabe für das erfasste Magnetfeld mindestens ein Element aus der Liste aufweist: ein absoluter Betrag für eine elektromagnetische Größe, eine Richtungsangabe für eine elektromagnetische Größe mit Koordinaten in einem zweidimensionalen Koordinatensystem, eine vektorielle Angabe *̅B̅*̅ mit einem absoluten Betrag |B| und mit Koordinaten für eine Richtungsangabe in einem zweidimensionalen Koordinatensystem, eine vektorielle Angabe *̅B̅*̅ mit einem absoluten Betrag |B| und mit Koordinaten für eine Richtungsangabe in einem dreidimensionalen Koordinatensystem, eine magnetische Flussdichte, eine magnetische Feldstärke.

Derartige Angaben ermöglichen einen Rückschluss auf die Position des magnetfeldbasierten Gegenelements. Mit einer zweidimensionalen Koordinatenangabe kann die Auswertung vereinfacht werden. Mit einer dreidimensionalen Koordinatenangabe kann die Position des magnetfeldbasierten Gegenelements mit erhöhtem Informationsinhalt und Genauigkeit bestimmt werden.

Bei einer Ausführungsform der Gefäßanordnung ist vorgesehen, dass die Information über eine Position des mindestens einen magnetfeldbasierten Gegenelements relativ zum mindestens einen magnetfeldbasierten Sensorelement mindestens ein Element aus der Liste aufweist: eine Winkelangabe, ein Abstand, ein absoluter Betrag für einen Vektor, eine Richtungsangabe, einen Vektor.

Je nach Anordnung des magnetfeldbasierten Gegenelements in dem Koordinatensystem des magnetfeldbasierten Sensorelements und / oder je nach Angabe, die durch das magnetfeldbasierte Sensorelement ausgegeben wird, können sich ein oder mehrere Elemente der genannten Liste zur günstigen Kennzeichnung der Position eignen und die Auswertung durch die Auswertungseinrichtung vereinfachen.

Bei einer Ausführungsform der Gefäßanordnung ist vorgesehen, dass ein Verriegelungselement vorgesehen ist, wobei das Verriegelungselement dazu vorgesehen ist, das erste Bauteil und das zweite Bauteil mit einer Bewegungstoleranz in einem Verriegelungszustand zu verriegeln, und dass die Auswertungseinrichtung dazu eingerichtet ist, auf der Grundlage der Bewegungstoleranz einen Toleranzbereich für eine Änderung des Aufnahmevolumens zu bestimmen.

Somit wird ein Toleranzbereich für die Gefäßanordnung individuell und für die aktuellen Umstände der Gefäßanordnung bestimmt. Anhand des Toleranzbereichs kann dann eine Aussage über eine Zulässigkeit einer beobachteten Änderung des Aufnahmevolumens getroffen werden, die beispielsweise für eine adäquate Steuerung der Gefäßanordnung oder eines Küchengeräts, mit der die Gefäßanordnung zusammenwirkt. Alternativ oder zusätzlich kann die Aussage einem Nutzer zur Verfügung gestellt werden, beispielsweise mittels einer Anzeigeeinrichtung, ggf. zusammen mit einem Nutzungshinweis.

Das Verriegelungselement kann als von dem ersten Bauteil und von dem zweiten Bauteil separates Element ausgebildet sein. Alternativ oder zusätzlich kann das Verriegelungselement Teil des ersten Bauteils oder Teil des zweiten Bauteils sein.

Bei einer Ausführungsform der Gefäßanordnung ist vorgesehen, dass die Auswertungseinrichtung dazu eingerichtet ist, eine Information für die Steuerung der Gefäßanordnung oder eines Küchengeräts, mit dem die Gefäßanordnung zusammenwirkt, auszugeben: die Information über eine Änderung des Aufnahmevolumens, die Information über eine Position des mindestens einen magnetfeldbasierten Gegenelements relativ zum mindestens einen magnetfeldbasierten Sensorelement, die mindestens eine Angabe für das erfasste Magnetfeld, die Referenzposition, die Erfassungshistorie, die Positionshistorie, der Toleranzbereich für eine Änderung des Aufnahmevolumens.

Dadurch kann die Gefäßanordnung oder das Küchengerät entsprechend beispielsweise einer bestimmten Änderung des Aufnahmevolumens automatisch gesteuert werden, insbesondere adäquate Gegenmaßnahmen wie Einschränkung einer Drehzahl für den elektrischen Motor oder eine Schneideeinheit, Sinken einer Temperatur eines Heizelements vornehmen.

Beispiele für die Information für die Steuerung der Gefäßanordnung oder eines Küchengeräts, mit dem die Gefäßanordnung zusammenwirkt, sind: eine Zulässigkeitsangabe für die Änderung des Aufnahmevolumens, ein Hinweis, ein Überschreiten einer vorgegebenen Volumenänderung, wobei diese Liste nicht abschließend ist.

Bei einer Ausführungsform des Verfahrens ist vorgesehen, dass ein Verriegelungszustand des ersten Bauteils mit dem zweiten Bauteil erfasst wird, dass nach Erfassen des Verriegelungszustandes ein Referenzierungsvorgang automatisch veranlasst wird, wobei der Referenzierungsvorgang mindestens Folgendes umfasst: Erfassen des Magnetfeldes des magnetfeldbasierten Gegenelements, wobei das erste Bauteil und das zweite Bauteil miteinander verriegelt sind, Ausgeben einer ersten Angabe für das erfasste Magnetfeld, Bestimmen einer Information über eine Position des mindestens einen magnetfeldbasierten Gegenelements relativ zum mindestens einen magnetfeldbasierten Sensorelement auf der Grundlage der ausgegebenen ersten Angabe, Definieren der Information über eine Position des mindestens einen magnetfeldbasierten Gegenelements relativ zum mindestens einen magnetfeldbasierten Sensorelement als Referenzposition, und dass die Information über eine Änderung eines durch das erste Bauteil und das zweite Bauteil ausgebildeten Aufnahmevolumens auf der Grundlage eines Vergleichs von mindestens einer Information über eine Position des mindestens einen magnetfeldbasierten Gegenelements relativ zum mindestens einen magnetfeldbasierten Sensorelement, die nach dem Definieren der Referenzposition bestimmt worden sind, mit der Referenzposition bestimmt wird.

Somit kann beispielsweise nach jedem Erfassen eines Verriegelungszustandes ein Referenzierungsvorgang durchgeführt werden, wodurch die Bestimmung einer Positionsänderung oder einer Änderung des Aufnahmevolumens situativ gestaltet werden kann. Durch die Automatisierung wird zudem die Nutzerfreundlichkeit erhöht, indem auf eine Nutzereingabe zum Veranlassen des Referenzierungsvorgangs verzichtet wird.

Bei einer Ausführungsform des Verfahrens ist vorgesehen, dass ein Verriegelungszustand des ersten Bauteils mit dem zweiten Bauteil erfasst wird, dass das Magnetfeld des mindestens einen magnetfeldbasierten Gegenelements zu einem ersten Zeitpunkt durch das mindestens eine magnetfeldbasierte Sensorelement erfasst wird, dass eine erste Angabe für das erfasste Magnetfeld ausgegeben wird, dass die erste Angabe für das erfasste Magnetfeld als Referenzangabe gespeichert wird, dass eine Information über eine Bewegungstoleranz für den Verriegelungszustand abgerufen wird, und dass auf der Grundlage der Referenzangabe und auf der Grundlage der Bewegungstoleranz ein Toleranzbereich für eine Änderung des Aufnahmevolumens bestimmt wird.

Dadurch wird direkt anhand eine durch das magnetfeldbasierte Sensorelement ausgegebene Angabe eine Referenzangabe festgelegt, wobei ein Auswertungsschritt, bei dem eine Position des Gegenelements auf der Grundlage der ausgegebenen Angabe bestimmt wird, entfällt. Somit wird auch bei jedem Durchführen des Verfahrens ein Zulässigkeitsrahmen für die erfassten Daten bzw. für die durch die durch mindestens ein magnetfeldbasiertes Sensorelement ausgegebenen Angaben festgelegt.

Die Information über eine Bewegungstoleranz kann lokal an der Auswertungseinrichtung, beispielsweise auf einem Speicher der Auswertungseinrichtung, oder auf einem externen Server abgelegt sein. Die Information über eine Bewegungstoleranz kann seitens des Herstellers der Gefäßanordnung definiert worden sein. Alternativ kann die Information über eine Bewegungstoleranz im Laufe des Lebenszyklus der Gefäßanordnung angepasst worden sein, um Änderungen der Gefäßanordnung zu berücksichtigen.

Bei einer Ausführungsform des Verfahrens ist vorgesehen, dass das Magnetfeld des mindestens einen magnetfeldbasierten Gegenelements zu einem zweiten Zeitpunkt durch das mindestens eine magnetfeldbasierte Sensorelement erfasst wird, dass eine zweite Angabe für das erfasste Magnetfeld ausgegeben wird, und dass auf der Grundlage der zweiten Angabe für das erfasste Magnetfeld und auf der Grundlage des Toleranzbereichs eine Information für die Steuerung der Gefäßanordnung oder eine Information für die Steuerung des Küchengeräts bestimmt wird.

Dadurch kann anhand der durch das mindestens eine magnetfeldbasierte Sensorelement ausgegebenen Angaben eine Änderung des Magnetfeldes beobachtet werden und die Gefäßanordnung bzw. ein Küchengerät, mit der die Gefäßanordnung zusammenwirkt, entsprechend gesteuert werden.

Beispiele für die Information für die Steuerung der Gefäßanordnung sind: eine Information über ein Abschalten eines Antriebs, eine Information über eine Minderung einer Drehzahl, eine Information über eine Minderung einer Heizleistung, eine Information über eine Sperrung eines Verriegelungselements, eine Information über die verzögerte angeforderte Entriegelung, eine Information über einen aktuellen Gerätestatus für eine Nutzeranzeige.

Bei einer Ausführungsform des Verfahrens ist vorgesehen, dass mindestens ein Steuerungsparameter für einen Zubereitungsvorgang an der Gefäßanordnung oder am Küchengerät in Abhängigkeit von mindestens einem Element aus der Liste automatisch angepasst wird: die Information über eine Änderung des Aufnahmevolumens, die Information über eine Position des mindestens einen magnetfeldbasierten Gegenelements relativ zum mindestens einen magnetfeldbasierten Sensorelement, die mindestens eine Angabe für das erfasste Magnetfeld, die Referenzangabe, eine Erfassungshistorie, eine Positionshistorie, der Toleranzbereich für eine Änderung des Aufnahmevolumens.

Eine automatische Steuerung bietet den Vorteil, eine Fehlbedienung durch einen Nutzer zu vermeiden. Darüber hinaus können Reaktionszeiten im Falle einer problematischen Gerätebenutzung, wie zum Beispiel bei einem als undurchlässig eingestuften Druckaufbau in dem Aufnahmeraum, verkürzt und somit die Handhabung der Gefäßanordnung verbessert werden. Insbesondere können in verkürzter Zeit zutreffende Maßnahmen automatisch vorgenommen werden, wie zum Beispiel ein Heizelement deaktivieren oder eine Heizleistung reduzieren.

Die folgenden nummerierten Absätze beschreiben Merkmale in Übereinstimmung mit Ausführungsformen der Offenbarung:
1. Gefäßanordnung für ein Küchengerät, aufweisend ein erstes Bauteil mit mindestens einem magnetfeldbasierten Sensorelement, ein zweites Bauteil mit mindestens einem magnetfeldbasierten Gegenelement, und eine Auswertungseinrichtung, wobei das erste Bauteil und das zweite Bauteil zusammen einen Aufnahmeraum mit einem Aufnahmevolumen bilden, wobei das mindestens eine magnetfeldbasierte Sensorelement dazu eingerichtet ist, ein Magnetfeld des mindestens einen magnetfeldbasierten Gegenelements zu erfassen und mindestens eine Angabe für das erfasste Magnetfeld auszugeben, wobei die Auswertungseinrichtung dazu eingerichtet ist, auf der Grundlage der mindestens einen für das erfasste Magnetfeld ausgegebenen Angabe eine Information über eine Position des mindestens einen magnetfeldbasierten Gegenelements relativ zum mindestens einen magnetfeldbasierten Sensorelement zu bestimmen, und wobei die Auswertungseinrichtung dazu eingerichtet ist, auf der Grundlage der Information über eine Position des mindestens einen magnetfeldbasierten Gegenelements relativ zum mindestens einen magnetfeldbasierten Sensorelement eine Information über eine Änderung des Aufnahmevolumens zu bestimmen.
2. Gefäßanordnung nach Absatz 1, wobei die Information über eine Änderung des Aufnahmevolumens einer Änderung der Position des mindestens einen magnetfeldbasierten Gegenelements relativ zum mindestens einen magnetfeldbasierten Sensorelement entspricht, wobei die Änderung der Position des mindestens einen magnetfeldbasierten Gegenelements relativ zum mindestens einen magnetfeldbasierten Sensorelement das Ergebnis einer translatorischen Bewegung, einer Rotationsbewegung oder einer Kombination hiervon ist.
3. Gefäßanordnung nach einem der voranstehenden Absätze 1 bis 2, wobei die Auswertungseinrichtung dazu eingerichtet ist, die Information über eine Position des mindestens einen magnetfeldbasierten Gegenelements relativ zum mindestens einen magnetfeldbasierten Sensorelement mit einer Referenzposition zu vergleichen, und wobei die Auswertungseinrichtung dazu eingerichtet ist, die Information über eine Änderung des Aufnahmevolumens auf der Grundlage des Vergleichs zu bestimmen.
4. Gefäßanordnung nach Absatz 3, wobei die Referenzposition auf der Grundlage einer früheren Erfassung des Magnetfeldes des mindestens einen magnetfeldbasierten Gegenelements bestimmt worden ist.
5. Gefäßanordnung nach einem der voranstehenden Absätze 1 bis 4, wobei das mindestens eine magnetfeldbasierte Sensorelement dazu eingerichtet ist, das Magnetfeld des mindestens einen magnetfeldbasierten Gegenelements zu mindestens zwei Zeitpunkten zu erfassen und für jedes Erfassen eine Angabe für das erfasste Magnetfeld auszugeben, wobei die Auswertungseinrichtung dazu eingerichtet ist, für die jeweiligen ausgegebenen Angaben eine Information über eine Position des mindestens einen magnetfeldbasierten Gegenelements relativ zum mindestens einen magnetfeldbasierten Sensorelement zu bestimmen, und wobei die Auswertungseinrichtung dazu eingerichtet ist, die Information über eine Änderung des Aufnahmevolumens auf der Grundlage der für die jeweiligen ausgegebenen Angaben bestimmten Informationen über eine Position des mindestens einen magnetfeldbasierten Gegenelements relativ zum mindestens einen magnetfeldbasierten Sensorelement zu bestimmen.
6. Gefäßanordnung nach einem der voranstehenden Absätze 1 bis 5, wobei die Auswertungseinrichtung dazu eingerichtet ist, die mindestens eine ausgegebene Angabe für das erfasste Magnetfeld in eine Erfassungshistorie zu speichern.
7. Gefäßanordnung nach einem der voranstehenden Absätze 1 bis 6, wobei die Auswertungseinrichtung dazu eingerichtet ist, die für die mindestens eine ausgegebene Angabe bestimmte Information über eine Position des mindestens einen magnetfeldbasierten Gegenelements relativ zum mindestens einen magnetfeldbasierten Sensorelement in eine Positionshistorie zu speichern.
8. Gefäßanordnung nach einem der voranstehenden Absätze 1 bis 7, wobei die mindestens eine Angabe für das erfasste Magnetfeld mindestens ein Element aus der Liste aufweist: ein absoluter Betrag für eine elektromagnetische Größe, eine Richtungsangabe für eine elektromagnetische Größe mit Koordinaten in einem zweidimensionalen Koordinatensystem, eine vektorielle Angabe *̅B̅*̅ mit einem absoluten Betrag |B| und mit Koordinaten für eine Richtungsangabe in einem zweidimensionalen Koordinatensystem, eine vektorielle Angabe *̅B̅*̅ mit einem absoluten Betrag |B| und mit Koordinaten für eine Richtungsangabe in einem dreidimensionalen Koordinatensystem, eine magnetische Flussdichte, eine magnetische Feldstärke.
9. Gefäßanordnung nach einem der voranstehenden Absätze 1 bis 8, wobei die Information über eine Position des mindestens einen magnetfeldbasierten Gegenelements relativ zum mindestens einen magnetfeldbasierten Sensorelement mindestens ein Element aus der Liste aufweist: eine Winkelangabe, ein Abstand, ein absoluter Betrag für einen Vektor, eine Richtungsangabe, einen Vektor.
10. Gefäßanordnung nach einem der voranstehenden Absätze 1 bis 9, wobei ein Verriegelungselement vorgesehen ist, wobei das Verriegelungselement dazu vorgesehen ist, das erste Bauteil und das zweite Bauteil mit einer Bewegungstoleranz in einem Verriegelungszustand zu verriegeln, und wobei die Auswertungseinrichtung dazu eingerichtet ist, auf der Grundlage der Bewegungstoleranz einen Toleranzbereich für eine Änderung des Aufnahmevolumens zu bestimmen.
11. Gefäßanordnung nach einem der voranstehenden Absätze 1 bis 10, wobei die Auswertungseinrichtung dazu eingerichtet ist, eine Information für die Steuerung der Gefäßanordnung oder eines Küchengeräts, mit dem die Gefäßanordnung zusammenwirkt, auszugeben: die Information über eine Änderung des Aufnahmevolumens, die Information über eine Position des mindestens einen magnetfeldbasierten Gegenelements relativ zum mindestens einen magnetfeldbasierten Sensorelement, die mindestens eine Angabe für das erfasste Magnetfeld, die Referenzposition, die Erfassungshistorie, die Positionshistorie, der Toleranzbereich für eine Änderung des Aufnahmevolumens.
12. Verfahren zum Betreiben einer Gefäßanordnung für ein Küchengerät, insbesondere einer Gefäßanordnung für ein Küchengerät nach einem der voranstehenden Absätze 1 bis 11, bei dem ein Magnetfeld mindestens eines an einem zweiten Bauteil der Gefäßanordnung vorgesehenen magnetfeldbasierten Gegenelements durch mindestens ein an einem ersten Bauteil der Gefäßanordnung vorgesehenen magnetfeldbasiertes Sensorelement erfasst wird, bei dem für das erfasste Magnetfeld mindestens eine Angabe für das erfasste Magnetfeld ausgegeben wird, bei dem eine Information über eine Position des mindestens einen magnetfeldbasierten Gegenelements relativ zum mindestens einen magnetfeldbasierten Sensorelement auf der Grundlage der mindestens einen für das erfasste Magnetfeld ausgegebenen Angabe bestimmt wird, und bei dem eine Information über eine Änderung eines durch das erste Bauteil und das zweite Bauteil ausgebildeten Aufnahmevolumens auf der Grundlage der Information über eine Position des mindestens einen magnetfeldbasierten Gegenelements relativ zum mindestens einen magnetfeldbasierten Sensorelement bestimmt wird.
13. Verfahren nach Absatz 12, wobei ein Verriegelungszustand des ersten Bauteils mit dem zweiten Bauteil erfasst wird, wobei nach Erfassen des Verriegelungszustandes ein Referenzierungsvorgang automatisch veranlasst wird, wobei der Referenzierungsvorgang mindestens Folgendes umfasst: Erfassen des Magnetfeldes des magnetfeldbasierten Gegenelements, wobei das erste Bauteil und das zweite Bauteil miteinander verriegelt sind, Ausgeben einer ersten Angabe für das erfasste Magnetfeld, Bestimmen einer Information über eine Position des mindestens einen magnetfeldbasierten Gegenelements relativ zum mindestens einen magnetfeldbasierten Sensorelement auf der Grundlage der ausgegebenen ersten Angabe, Definieren der Information über eine Position des mindestens einen magnetfeldbasierten Gegenelements relativ zum mindestens einen magnetfeldbasierten Sensorelement als Referenzposition, und wobei die Information über eine Änderung eines durch das erste Bauteil und das zweite Bauteil ausgebildeten Aufnahmevolumens auf der Grundlage eines Vergleichs von mindestens einer Information über eine Position des mindestens einen magnetfeldbasierten Gegenelements relativ zum mindestens einen magnetfeldbasierten Sensorelement, die nach dem Definieren der Referenzposition bestimmt worden sind, mit der Referenzposition bestimmt wird.
14. Verfahren nach Absatz 12 oder 13, wobei ein Verriegelungszustand des ersten Bauteils mit dem zweiten Bauteil erfasst wird, wobei das Magnetfeld des mindestens einen magnetfeldbasierten Gegenelements zu einem ersten Zeitpunkt durch das mindestens eine magnetfeldbasierte Sensorelement erfasst wird, wobei eine erste Angabe für das erfasste Magnetfeld ausgegeben wird, wobei die erste Angabe für das erfasste Magnetfeld als Referenzangabe gespeichert wird, wobei eine Information über eine Bewegungstoleranz für den Verriegelungszustand abgerufen wird, und wobei auf der Grundlage der Referenzangabe und auf der Grundlage der Bewegungstoleranz ein Toleranzbereich für eine Änderung des Aufnahmevolumens bestimmt wird.
15. Verfahren nach Absatz 14, wobei das Magnetfeld des mindestens einen magnetfeldbasierten Gegenelements zu einem zweiten Zeitpunkt durch das mindestens eine magnetfeldbasierte Sensorelement erfasst wird, wobei eine zweite Angabe für das erfasste Magnetfeld ausgegeben wird, und wobei auf der Grundlage der zweiten Angabe für das erfasste Magnetfeld und auf der Grundlage des Toleranzbereichs eine Information für die Steuerung der Gefäßanordnung oder eine Information für die Steuerung des Küchengeräts bestimmt wird.
16. Verfahren nach einem der Absätze 12 bis 15, wobei mindestens ein Steuerungsparameter für einen Zubereitungsvorgang an der Gefäßanordnung oder am Küchengerät in Abhängigkeit von mindestens einem Element aus der Liste automatisch angepasst wird: die Information über eine Änderung des Aufnahmevolumens, die Information über eine Position des mindestens einen magnetfeldbasierten Gegenelements relativ zum mindestens einen magnetfeldbasierten Sensorelement, die mindestens eine Angabe für das erfasste Magnetfeld, die Referenzangabe, eine Erfassungshistorie, eine Positionshistorie, der Toleranzbereich für eine Änderung des Aufnahmevolumens.
17. Maschinenlesbares Speichermedium mit Programmanweisungen, die, wenn sie durch einen Prozessor einer Gefäßanordnung für ein Küchengerät, insbesondere einer Gefäßanordnung nach einem der Absätze 1 bis 10, oder durch den Prozessor eines Küchengeräts mit einer Gefäßanordnung nach einem der Absätze 1 bis 11 ausgeführt werden, die Gefäßanordnung oder das Küchengerät dazu veranlassen, ein Verfahren nach einem der Absätze 12 bis 16 durchzuführen.

Weitere Merkmale und Vorteile der Gefäßanordnung, des Verfahrens und des maschinenlesbare Speichermediums ergeben sich aus der nachfolgenden Beschreibung von Ausführungsbeispielen, wobei auf die beigefügte Zeichnung Bezug genommen wird.

In der Zeichnung zeigen:
- Fig. 1: ein erstes Ausführungsbeispiel einer Gefäßanordnung für ein Küchengerät;
- Fig. 2a: ein zweites Ausführungsbeispiel einer Gefäßanordnung für ein Küchengerät in einer ersten Position;
- Fig. 2b: das zweite Ausführungsbeispiel einer Gefäßanordnung für ein Küchengerät in einer zweiten Position;
- Fig. 3: ein drittes Ausführungsbeispiel einer Gefäßanordnung für ein Küchengerät;
- Fig. 4: eine schematische Darstellung mehrerer Positionen eines magnetfeldbasierten Gegenelements relativ zu einem magnetfeldbasierten Sensorelement;
- Fig. 5a: eine schematische Kurvendarstellung von Winkelpositionen eines magnetfeldbasierten Gegenelements relativ zu einem ersten magnetfeldbasierten Sensorelement über die Zeit;
- Fig. 5b: eine schematische Kurvendarstellung von Winkelpositionen eines magnetfeldbasierten Gegenelements relativ zu einem zweiten magnetfeldbasierten Sensorelement über die Zeit; und
- Fig. 5c: eine schematische Kurvendarstellung für eine Krafteinwirkung über die Zeit.

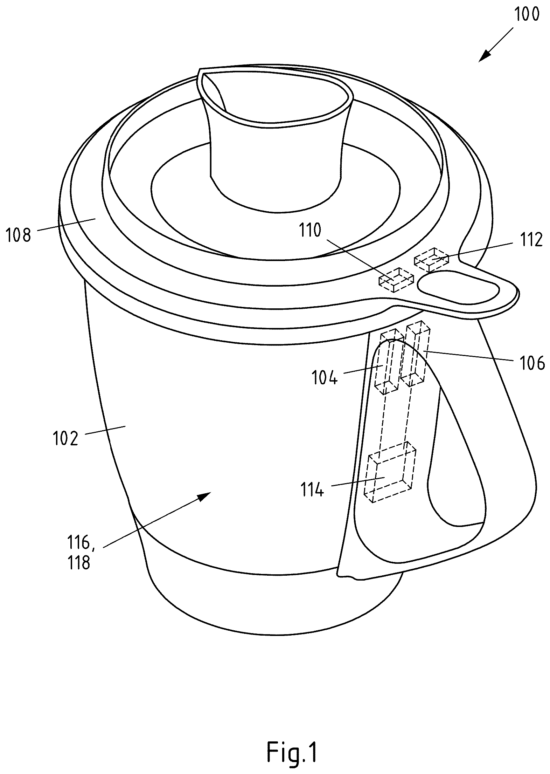

Fig. 1 zeigt ein erstes Ausführungsbeispiel einer Gefäßanordnung 100 für ein Küchengerät. Die Gefäßanordnung 100 weist ein erstes Bauteil 102 mit einem ersten magnetfeldbasierten Sensorelement 104 und mit einem zweiten magnetfeldbasierten Sensorelement 106, ein zweites Bauteil 108 mit einem ersten magnetfeldbasierten Gegenelement 110 und mit einem zweiten magnetfeldbasierten Gegenelement 112, und eine Auswertungseinrichtung auf. Das erste Bauteil 102 ist als Speiseaufnahmeelement ausgebildet und das zweite Bauteil 108 ist als Abdeckungselement ausgebildet. Das zweite Bauteil 108 ist auf dem ersten Bauteil 102 aufgesetzt und diese bilden zusammen einen Aufnahmeraum 116 mit einem Aufnahmevolumen118.

Das erste magnetfeldbasierte Sensorelement 104 und das zweite magnetfeldbasierte Sensorelement 106 sind mit der Auswertungseinrichtung für Datentransfer verbunden. Das erste magnetfeldbasierte Gegenelement 110 und das zweite magnetfeldbasierte Gegenelement 112 sind am zweiten Bauteil 108 nebeneinander angeordnet. In der dargestellten geschlossenen Position des zweiten Bauteils 108 mit dem ersten Bauteil 102 ist. das erste magnetfeldbasierte Gegenelement 110 gegenüber dem ersten magnetfeldbasierten Sensorelement 104 angeordnet und das zweite magnetfeldbasierte Gegenelement 112 ist gegenüber dem zweiten magnetfeldbasierten Sensorelement 106 angeordnet.

Das erste magnetfeldbasierte Gegenelement 110 ist als Dauermagnet ausgebildet und dazu eingerichtet, ein erstes Magnetfeld zu erzeugen. Das zweite magnetfeldbasierte Gegenelement 112 ist ebenfalls als Dauermagnet ausgebildet und dazu eingerichtet, ein erstes Magnetfeld zu erzeugen.

Das erste magnetfeldbasierte Sensorelement 104 ist dazu eingerichtet, das erste Magnetfeld und das zweite Magnetfeld bzw. eine Überlappung des ersten Magnetfeldes mit dem zweiten Magnetfeld zu erfassen, und eine magnetische Flussdichte an die Auswertungseinrichtung auszugeben. Das zweite magnetfeldbasierte Sensorelement 106 ist ebenfalls dazu eingerichtet, das erste Magnetfeld und das zweite Magnetfeld bzw. eine Überlappung des ersten Magnetfeldes mit dem zweiten Magnetfeld zu erfassen. Das erste magnetfeldbasierte Sensorelement 104 und das zweite magnetfeldbasierte Sensorelement 106 sind jeweils als 3D-Hall-Sensoren ausgebildet und dazu eingerichtet, für ein erfasstes Magnetfeld eine Angabe mit Komponenten in den Richtungen x, y und z auszugeben. Die Auswertungseinrichtung ist dazu eingerichtet, auf der Grundlage einer solchen Angabe eine magnetische Flussdichte mit einem absoluten Betrag und mit einem positiven oder einem negativen Vorzeichen zu berechnen.

Die Auswertungseinrichtung ist ferner dazu eingerichtet, auf der Grundlage einer ersten, durch das erste magnetfeldbasierte Sensorelement 104 ausgegebenen Angabe bzw. auf der Grundlage einer hieraus berechneten ersten magnetischen Flussdichte einen ersten Wert für einen ersten Winkel Theta zu berechnen, wobei der erste Winkel Theta für eine Position des ersten magnetfeldbasierten Gegenelements 110 und / oder des zweiten magnetfeldbasierten Gegenelements 112 relativ zum ersten magnetfeldbasierten Sensorelement 104 indikativ ist. Daneben ist die Auswertungseinrichtung dazu eingerichtet, auf der Grundlage einer zweiten, durch das zweite magnetfeldbasierte Sensorelement 106 ausgegebenen Angabe bzw. auf der Grundlage einer hieraus berechneten zweiten magnetischen Flussdichte einen zweiten Wert für einen zweiten Winkel Theta zu berechnen, wobei der zweite Winkel Theta für eine Position des ersten magnetfeldbasierten Gegenelements 110 und / oder des zweiten magnetfeldbasierten Gegenelements 112 relativ zum zweiten magnetfeldbasierten Sensorelement 106 indikativ ist.

Die Auswertungseinrichtung ist ferner dazu eingerichtet, auf der Grundlage der durch das erste magnetfeldbasierte Sensorelement 104 ausgegebenen Angabe und auf der Grundlage der durch das zweite magnetfeldbasierte Sensorelement 106 ausgegebenen Angabe eine Überprüfung mittels eines Redundanz-Checks durchzuführen.

Weiter ist die Auswertungseinrichtung dazu eingerichtet, auf der Grundlage des ersten Werts für den ersten Winkel Theta und auf der Grundlage des zweiten Werts für den zweiten Winkel Theta einen Wert zu bestimmen, der für eine Änderung des Aufnahmevolumens 118 indikativ ist. Dabei kann die Änderung Null sein.

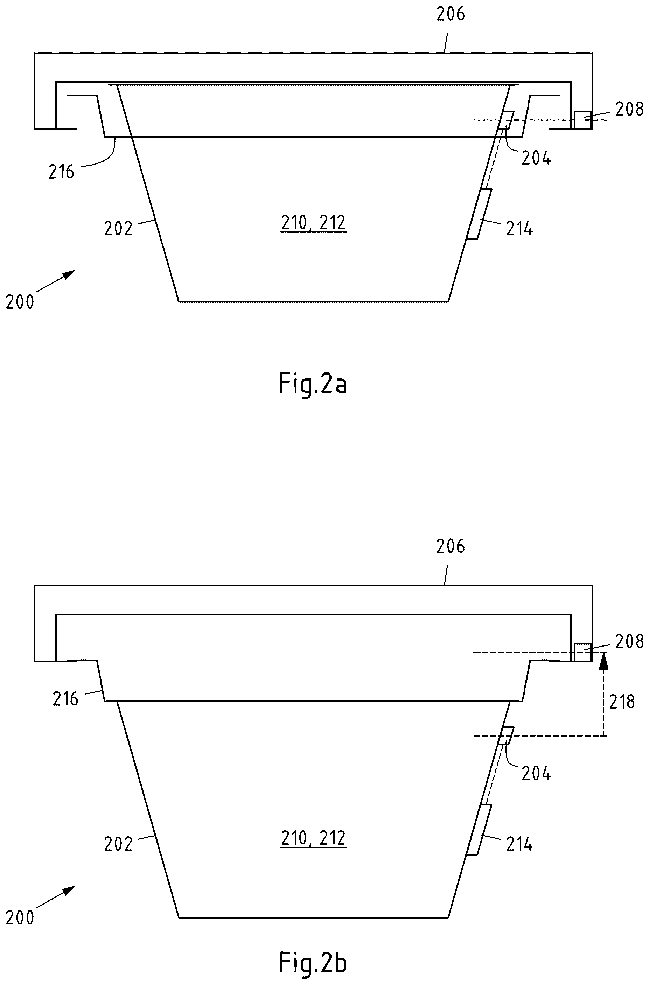

Fig. 2a zeigt eine Gefäßanordnung 200 für ein Küchengerät gemäß eines zweiten Ausführungsbeispiels in einer ersten Position. Fig. 2b zeigt dieselbe Gefäßanordnung 200 in einer zweiten Position.

Die Gefäßanordnung 200 weist ein erstes Bauteil 202 in Form eines Speiseaufnahmeelements mit einem magnetfeldbasierten Sensorelement 204 und ein zweites Bauteil 206 in Form eines Abdeckungselements mit einem magnetfeldbasierten Gegenelement 208auf. Das zweite Bauteil 206 ist auf dem ersten Bauteil 202 aufgesetzt und diese bilden zusammen einen Aufnahmeraum 210 mit einem Aufnahmevolumen 212. Die Gefäßanordnung 200 weist zudem eine Auswertungseinrichtung 114 und ein Verriegelungselement 216 auf.

Sowohl in der ersten Position (Fig. 2a) als auch in der zweiten Position (Fig. 2b) ist das zweite Bauteil 206 auf dem ersten Bauteil 202 aufgesetzt und das erste Bauteil 202 und das zweite Bauteil 206 sind durch das Verriegelungselement 216 verriegelt.

In der ersten Position liegt das zweite Bauteil 206 an dem ersten Bauteil 202 an und der Aufnahmeraum 210 weist einen ersten Aufnahmevolumen auf. In der zweiten Position ist das zweite Bauteil 206 aufgrund einer Druckerhöhung in dem Aufnahmeraum 210 gegenüber dem ersten Bauteil 202 gehoben und der Aufnahmeraum 210 weist einen zweiten Aufnahmevolumen auf, wobei der zweite Aufnahmevolumen größer als der erste Aufnahmevolumen ist.

In der ersten Position sind das magnetfeldbasierte Sensorelement 204 und das magnetfeldbasierte Gegenelement 208mit einem ersten Abstand voneinander beabstandet. In der zweiten Position sind das magnetfeldbasierte Sensorelement 204 und das magnetfeldbasierte Gegenelement 208aufgrund der Verschiebung 218 des zweiten Bauteils 206 mit einem zweiten, relativ zum ersten Abstand größeren Abstand voneinander beabstandet.

Die Auswertungseinrichtung 214 ist dazu eingerichtet, die Änderung zwischen dem ersten Aufnahmevolumen und dem zweiten Aufnahmevolumen zu bestimmen. Ferner ist die Auswertungseinrichtung 214 dazu eingerichtet, eine erste Information für die Steuerung der Gefäßanordnung 200 in Form eines Befehls für eine Reduktion einer Heizleitung am ersten Bauteil 202, und eine zweite Information für die Steuerung der Gefäßanordnung 200 in Form eines Sperrbefehls für die Entriegelung des Verriegelungselements 216 auszugeben.

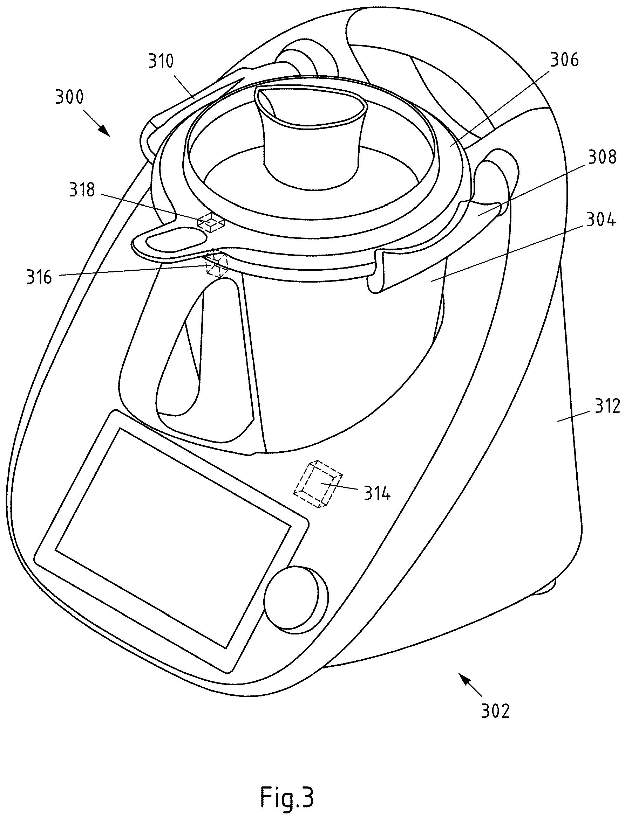

Fig. 3 zeigt ein drittes Ausführungsbeispiel einer Gefäßanordnung 300 für ein Küchengerät 302. Das Küchengerät 302 weist die Gefäßanordnung 300 mit einem ersten Bauteil 304 und mit einem zweiten Bauteil 306, zwei Verriegelungselemente 308, 310, ein Grundgerät 312 und eine Auswertungseinrichtung 314 auf. Am ersten Bauteil 304 ist ein magnetfeldbasiertes Sensorelement 316 in Form eines 3D-HallSensors angeordnet. Am zweiten Bauteil 306 ist ein magnetfeldbasiertes Gegenelement 318 in Form eines Dauermagnets angeordnet. Die Auswertungseinrichtung 314 ist am Grundgerät 312 angeordnet und ist zugleich eine Steuereinrichtung für das Küchengerät 302.

Der 3D-Hall-Sensor ist dazu eingerichtet, Werte für Koordinaten in 3 Raumrichtungen für eine magnetische Flussdichte auszugeben.

Die Auswertungseinrichtung 314 ist dazu eingerichtet, anhand von durch das magnetfeldbasierte Sensorelement 316 für Magnetfeld des magnetfeldbasierten Gegenelement 318 ausgegebenen Flussdichten eine Veränderung der magnetischen Flussdichte zu bestimmen. Die Flussdichte ist abhängig von der Ausrichtung des magnetfeldbasierten Gegenelements 318 relativ zum magnetfeldbasierten Sensorelement 316 und somit auch von der Winkelposition des magnetfeldbasierten Gegenelements 318 relativ zum magnetfeldbasierten Sensorelement 316.

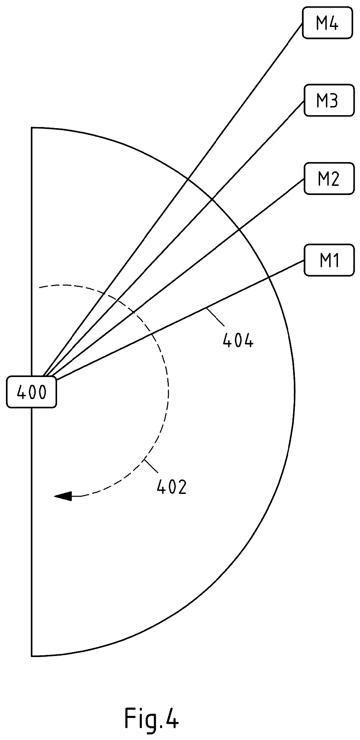

Fig. 4 zeigt eine schematische Darstellung mehrerer Positionen eines magnetfeldbasierten Gegenelements relativ zu einem magnetfeldbasierten Sensorelement 400, wobei die dargestellten Positionen nicht abschließend sind und lediglich als Beispiele dienen. Das magnetfeldbasierten Gegenelements kann weitere Positionen relativ zu einem magnetfeldbasierten Sensorelement 400 annehmen. Mehrere Winkelpositionen M1, M2, M3 und M4 des magnetfeldbasierten Gegenelements sind dargestellt, wobei die Winkelpositionen M1, M2, M3 und M4 unterschiedlichen Werten für einen Theta Winkel 402 entsprechen. Der Theta Winkel 402 ist der Winkel zwischen einer fiktiven Gerade, die sich durch das magnetfeldbasierte Sensorelement 400 erstreckt, und der Position M1, M2, M3 oder M4 des magnetfeldbasierten Gegenelements, wobei die Position des magnetfeldbasierten Sensorelements 400 als Koordinatenursprung dient.

Im Folgenden werden exemplarische Situationen beschrieben, die beim Einsatz einer Gefäßanordnung, die das magnetfeldbasierte Sensorelement 400 und das magnetfeldbasierte Gegenelement aufweist, jeder der vier dargestellten Positionen des magnetfeldbasierten Gegenelements relativ zum magnetfeldbasierten Sensorelement 400 entsprechen können. Dabei weist die Gefäßanordnung eine Auswertungseinrichtung, ein erstes Bauteil in Form eines Topfes und ein zweites Bauteil in Form eines Deckels auf, wobei das magnetfeldbasierte Sensorelement 400 am ersten Bauteil angeordnet ist und wobei das magnetfeldbasierte Gegenelement am zweiten Bauteil angeordnet ist.

Die Position M1 entspricht bspw. dem verriegelten Deckel, also der Nulllage ohne Innendruck oder anliegende Trombe. Bei Detektion der Position M1 darf mit der Gefäßanordnung 400 geheizt und geschnitten werden.

Bei Deckelposition M2 hat sich der Deckel in Folge eines Druckaufbaus oder einer anliegenden Trombe in dem abgedeckten Topf von dem Topfrand angehoben. Bei Detektion der Position M2 wird abgefragt, ob bspw. eine Drehzahl größer / gleich eines Drehzahlschwellenwerts anliegt. Ist das der Fall und eine Temperatur im Topf kleiner bspw. als 95°C erfasst, dann kann der Deckelhub auf eine Trombe zurückgeführt werden. In diesem Fall wird der aktuell laufende Kochprozess nicht geändert. Ist die Drehzahl kleiner als der Drehzahlschwellenwert und es wird eine Temperatur bspw. größer als 95°C im Topf erfasst, so kann das Deckelanheben auf einen thermischen Druckaufbau zurückgeführt werden. In diesem Fall wird die Heizleistung auf ein Maximum von bspw. 30 bis 50% der bisherigen Heizleistung begrenzt, um einem weiteren Druckaufbau entgegenzuwirken. Eine Erhöhung der Heizleistung wird dann nur freigegeben, wenn die Position M1 für eine vorbestimmt Dauer erfasst wird.

Wird die Position M3 erfasst, so kann bestimmt werden, dass ein Spiel in einem Deckelverriegelungssystem der Gefäßanordnung 400 voll ausgereizt ist, und ggf. dass eine Verbiegung des Deckels vorliegt. Die Auswertungseinrichtung kann dann überprüfen, ob eine erhöhte Drehzahl für eine Schneide- oder Rühreinheit im Topf eingestellt ist. Ist die Drehzahl nicht bspw. größer gleich eines ersten Drehzahlschwellenwertes und es wird eine Temperatur bspw. unter 95°C im Topf erfasst, dann gibt die Auswertungseinrichtung einen Befehl aus, die Drehzahl langsam zu reduzieren und überprüft, ob die Position M2 wieder erfasst wird. Wenn dies der Fall ist, dann bestimmt die Auswertungseinrichtung, dass kein thermischer Innendruck im Topf anliegt, und dass der Topf überfüllt ist. Wird eine Temperatur größer als 95°C erfasst und die Drehzahl ist kleiner als ein zweiter, niedrigerer Drehzahlschwellenwert, dann bestimmt die Auswertungseinrichtung, dass ein thermischer Innendruck im Topf anliegt und gibt einen Befehl aus, die Heizleistung auf bspw. 10 bis 30% der bisherigen Heizleitung zu reduzieren, bis die Position M2 wieder erfasst wird. Wird nach Ablauf einer Dauer von bspw. 3 Minuten die Position M2 nicht erfasst, gibt die Auswertungseinrichtung einen Befehl aus, die Heizung zu stoppen und die Drehzahl weiter unverändert zu lassen.

Die Position M4 stellt den Zustand dar, bei dem der Deckel offen ist, also nicht mehr im Eingriff mit dem Topf oder dem Verriegelungselement und es wird eine Leckage erwartet. Die Auswertungseinrichtung gibt einen Befehl aus, die Drehzahl und die Heizleistung auf Minimum bzw. Null zu reduzieren. Die Auswertungseinrichtung kann zudem überprüfen, ob ein Öffnungsmechanismus auf Öffnen gesteuert worden ist. Wenn nicht, dann bestimmt die Auswertungseinrichtung, dass ein Defekt des Deckels vorliegt.

Optional kann beim Erfassen der Positionen M2 oder M3 oder M4 einem Nutzer ein Hinweis beispielsweise mittels einer Anzeige zur Verfügung gestellt werden. Alternativ oder zusätzlich kann die Heizleistung ohne Ausgeben eines Hinweises für den Nutzer reduziert werden.

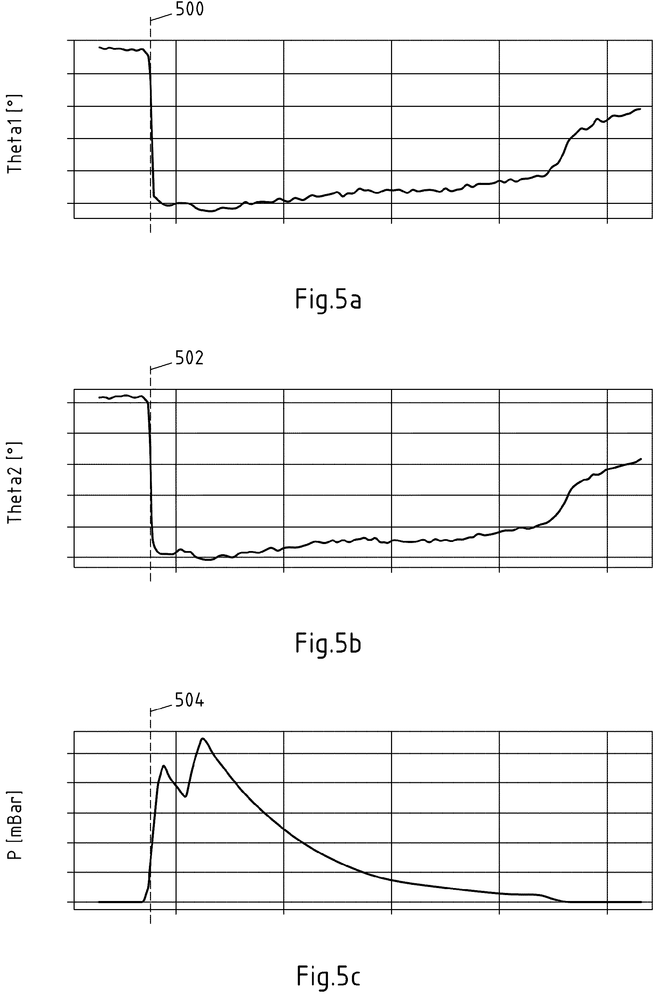

Fig. 5a und Fig. 5b zeigen jeweils eine schematische Kurvendarstellung von Winkelpositionen eines magnetfeldbasierten Gegenelements einer Gefäßanordnung gemäß der vorliegenden Offenbarung über die Zeit. Die in der Fig. 5a gezeigten Winkelpositionen sind relativ zu einem ersten magnetfeldbasierten Sensorelement der Gefäßanordnung und die in der Fig. 5b gezeigten Winkelpositionen sind relativ zu einem zweiten magnetfeldbasierten Sensorelement der Gefäßanordnung. Die Fig. 5c zeigt eine schematische Kurvendarstellung für eine Kraftwirkung über die Zeit, wobei hier die Krafteinwirkung durch Druck entstanden ist und mit einem Drucksensor im Aufnahmeraum der Gefäßanordnung erfasst wurde. Die Zeitachsen der Kurvendarstellungen der Fig. 5a, 5b und 5c zeigen denselben Zeitraum an.

Die Kurvendarstellungen der Fig. 5a und 5b weisen jeweils eine Flanke 500, 502 auf, die einer Flanke 504 in der Kurvendarstellung der Fig. 5c zeitlich entspricht. So zeigen die Kurvendarstellungen, dass eine Änderung der Winkelposition des magnetbasierten Gegenelements gegenüber dem magnetbasierten Sensorelement eine Aufnahmevolumenänderung des Aufnahmeraums der Gefäßanordnung entspricht, hier insbesondere dass eine Änderung der Winkelposition des magnetbasierten Gegenelements gegenüber dem magnetbasierten Sensorelement eine Aufnahmevolumenänderung des Aufnahmeraums der Gefäßanordnung entspricht.

## Patentansprüche

1. Gefäßanordnung (100, 200, 300) für ein Küchengerät (302), aufweisend:
- ein erstes Bauteil (102, 202, 304) mit mindestens einem magnetfeldbasierten Sensorelement (104, 106, 204, 316, 400),
- ein zweites Bauteil (108, 206, 306) mit mindestens einem magnetfeldbasierten Gegenelement (110, 112, 208, 318), und
- eine Auswertungseinrichtung (114, 214, 314),
- wobei das erste Bauteil (102, 202, 304) und das zweite Bauteil (108, 206, 306) zusammen einen Aufnahmeraum (116, 210) mit einem Aufnahmevolumen (118, 212) bilden,
**dadurch gekennzeichnet,**
- **dass** das mindestens eine magnetfeldbasierte Sensorelement (104, 106, 204, 316, 400) dazu eingerichtet ist, ein Magnetfeld des mindestens einen magnetfeldbasierten Gegenelements (110, 112, 208, 318) zu erfassen und mindestens eine Angabe für das erfasste Magnetfeld auszugeben,
- **dass** die Auswertungseinrichtung (114, 214, 314) dazu eingerichtet ist, auf der Grundlage der mindestens einen für das erfasste Magnetfeld ausgegebenen Angabe eine Information über eine Position (M1, M2, M3, M4) des mindestens einen magnetfeldbasierten Gegenelements (110, 112, 208, 318) relativ zum mindestens einen magnetfeldbasierten Sensorelement (104, 106, 204, 316, 400) zu bestimmen, und
- **dass** die Auswertungseinrichtung (114, 214, 314) dazu eingerichtet ist, auf der Grundlage der Information über eine Position (M1, M2, M3, M4) des mindestens einen magnetfeldbasierten Gegenelements (110, 112, 208, 318) relativ zum mindestens einen magnetfeldbasierten Sensorelement (104, 106, 204, 316, 400) eine Information über eine Änderung des Aufnahmevolumens (118, 212) zu bestimmen.

2. Gefäßanordnung (100, 200, 300) nach Anspruch 1,
**dadurch gekennzeichnet,**
- **dass** die Information über eine Änderung des Aufnahmevolumens (118, 212) einer Änderung der Position (M1, M2, M3, M4) des mindestens einen magnetfeldbasierten Gegenelements (110, 112, 208, 318) relativ zum mindestens einen magnetfeldbasierten Sensorelement (104, 106, 204, 316, 400) entspricht,
- wobei die Änderung der Position (M1, M2, M3, M4) des mindestens einen magnetfeldbasierten Gegenelements (110, 112, 208, 318) relativ zum mindestens einen magnetfeldbasierten Sensorelement (104, 106, 204, 316, 400) das Ergebnis einer translatorischen Bewegung, einer Rotationsbewegung oder einer Kombination hiervon ist.

3. Gefäßanordnung (100, 200, 300) nach einem der voranstehenden Ansprüche,
**dadurch gekennzeichnet,**
- **dass** die Auswertungseinrichtung (114, 214, 314) dazu eingerichtet ist, die Information über eine Position (M1, M2, M3, M4) des mindestens einen magnetfeldbasierten Gegenelements (110, 112, 208, 318) relativ zum mindestens einen magnetfeldbasierten Sensorelement (104, 106, 204, 316, 400) mit einer Referenzposition zu vergleichen,
- **dass** die Auswertungseinrichtung (114, 214, 314) dazu eingerichtet ist, die Information über eine Änderung des Aufnahmevolumens (118, 212) auf der Grundlage des Vergleichs zu bestimmen, und
**dass** insbesondere die Referenzposition auf der Grundlage einer früheren Erfassung des Magnetfeldes des mindestens einen magnetfeldbasierten Gegenelements (110, 112, 208, 318) bestimmt worden ist.

4. Gefäßanordnung (100, 200, 300) nach einem der voranstehenden Ansprüche,
**dadurch gekennzeichnet,**
- **dass** das mindestens eine magnetfeldbasierte Sensorelement (104, 106, 204, 316, 400) dazu eingerichtet ist, das Magnetfeld des mindestens einen magnetfeldbasierten Gegenelements (110, 112, 208, 318) zu mindestens zwei Zeitpunkten zu erfassen und für jedes Erfassen eine Angabe für das erfasste Magnetfeld auszugeben,
- **dass** die Auswertungseinrichtung (114, 214, 314) dazu eingerichtet ist, für die jeweiligen ausgegebenen Angaben eine Information über eine Position (M1, M2, M3, M4) des mindestens einen magnetfeldbasierten Gegenelements (110, 112, 208, 318) relativ zum mindestens einen magnetfeldbasierten Sensorelement (104, 106, 204, 316, 400) zu bestimmen, und
- **dass** die Auswertungseinrichtung (114, 214, 314) dazu eingerichtet ist, die Information über eine Änderung des Aufnahmevolumens (118, 212) auf der Grundlage der für die jeweiligen ausgegebenen Angaben bestimmten Informationen über eine Position (M1, M2, M3, M4) des mindestens einen magnetfeldbasierten Gegenelements (110, 112, 208, 318) relativ zum mindestens einen magnetfeldbasierten Sensorelement (104, 106, 204, 316, 400) zu bestimmen.

5. Gefäßanordnung (100, 200, 300) nach einem der voranstehenden Ansprüche,
**dadurch gekennzeichnet,**
**dass** die Auswertungseinrichtung (114, 214, 314) dazu eingerichtet ist, die für die mindestens eine ausgegebene Angabe bestimmte Information über eine Position (M1, M2, M3, M4) des mindestens einen magnetfeldbasierten Gegenelements (110, 112, 208, 318) relativ zum mindestens einen magnetfeldbasierten Sensorelement (104, 106, 204, 316, 400) in eine Positionshistorie zu speichern.

6. Gefäßanordnung (100, 200, 300) nach einem der voranstehenden Ansprüche,
**dadurch gekennzeichnet,**
**dass** die mindestens eine Angabe für das erfasste Magnetfeld mindestens ein Element aus der Liste aufweist: ein absoluter Betrag für eine elektromagnetische Größe, eine Richtungsangabe für eine elektromagnetische Größe mit Koordinaten in einem zweidimensionalen Koordinatensystem, eine vektorielle Angabe *̅B̅*̅ mit einem absoluten Betrag |B| und mit Koordinaten für eine Richtungsangabe in einem zweidimensionalen Koordinatensystem, eine vektorielle Angabe *̅B̅*̅ mit einem absoluten Betrag |B| und mit Koordinaten für eine Richtungsangabe in einem dreidimensionalen Koordinatensystem, eine magnetische Flussdichte, eine magnetische Feldstärke.

7. Gefäßanordnung (100, 200, 300) nach einem der voranstehenden Ansprüche,
**dadurch gekennzeichnet,**
**dass** die Information über eine Position des mindestens einen magnetfeldbasierten Gegenelements (110, 112, 208, 318) relativ zum mindestens einen magnetfeldbasierten Sensorelement (104, 106, 204, 316, 400) mindestens ein Element aus der Liste aufweist: eine Winkelangabe, ein Abstand, ein absoluter Betrag für einen Vektor, eine Richtungsangabe, einen Vektor.

8. Gefäßanordnung (100, 200, 300) nach einem der voranstehenden Ansprüche,
**dadurch gekennzeichnet,**
- **dass** ein Verriegelungselement (216, 308, 310) vorgesehen ist,
- wobei das Verriegelungselement (216, 308, 310) dazu vorgesehen ist, das erste Bauteil (102, 202, 304) und das zweite Bauteil (108, 206, 306) mit einer Bewegungstoleranz in einem Verriegelungszustand zu verriegeln, und
- **dass** die Auswertungseinrichtung (114, 214, 314) dazu eingerichtet ist, auf der Grundlage der Bewegungstoleranz einen Toleranzbereich für eine Änderung des Aufnahmevolumens (118, 212) zu bestimmen.

9. Gefäßanordnung (100, 200, 300) nach einem der voranstehenden Ansprüche, **dadurch gekennzeichnet,**
**dass** die Auswertungseinrichtung (114, 214, 314) dazu eingerichtet ist, eine Information für die Steuerung der Gefäßanordnung (100, 200, 300) oder eines Küchengeräts (302), mit dem die Gefäßanordnung (100, 200, 300) zusammenwirkt, auszugeben: die Information über eine Änderung des Aufnahmevolumens (118, 212), die Information über eine Position des mindestens einen magnetfeldbasierten Gegenelements (110, 112, 208, 318) relativ zum mindestens einen magnetfeldbasierten Sensorelement (104, 106, 204, 316, 400), die mindestens eine Angabe für das erfasste Magnetfeld, die Referenzposition, die Erfassungshistorie, die Positionshistorie, der Toleranzbereich für eine Änderung des Aufnahmevolumens (118, 212).

10. Verfahren zum Betreiben einer Gefäßanordnung (100, 200, 300) für ein Küchengerät (302), insbesondere einer Gefäßanordnung (100, 200, 300) für ein Küchengerät (302) nach einem der voranstehenden Ansprüche,
- bei dem ein Magnetfeld mindestens eines an einem zweiten Bauteil (108, 206, 306) der Gefäßanordnung (100, 200, 300) vorgesehenen magnetfeldbasierten Gegenelements (110, 112, 208, 318) durch mindestens ein an einem ersten Bauteil (102, 202, 304) der Gefäßanordnung (100, 200, 300) vorgesehenen magnetfeldbasiertes Sensorelement (104, 106, 204, 316, 400) erfasst wird,
- bei dem für das erfasste Magnetfeld mindestens eine Angabe für das erfasste Magnetfeld ausgegeben wird,
- bei dem eine Information über eine Position (M1, M2, M3, M4) des mindestens einen magnetfeldbasierten Gegenelements (110, 112, 208, 318) relativ zum mindestens einen magnetfeldbasierten Sensorelement (104, 106, 204, 316, 400) auf der Grundlage der mindestens einen für das erfasste Magnetfeld ausgegebenen Angabe bestimmt wird, und
- bei dem eine Information über eine Änderung eines durch das erste Bauteil (102, 202, 304) und das zweite Bauteil (108, 206, 306) ausgebildeten Aufnahmevolumens (118, 212) auf der Grundlage der Information über eine Position (M1, M2, M3, M4) des mindestens einen magnetfeldbasierten Gegenelements (110, 112, 208, 318) relativ zum mindestens einen magnetfeldbasierten Sensorelement (104, 106, 204, 316, 400) bestimmt wird.

11. Verfahren nach Anspruch 10,
**dadurch gekennzeichnet,**
**dass** ein Verriegelungszustand des ersten Bauteils (102, 202, 304) mit dem zweiten Bauteil (108, 206, 306) erfasst wird,
- **dass** nach Erfassen des Verriegelungszustandes ein Referenzierungsvorgang automatisch veranlasst wird,
- wobei der Referenzierungsvorgang mindestens Folgendes umfasst:
- Erfassen des Magnetfeldes des magnetfeldbasierten Gegenelements (110, 112, 208, 318), wobei das erste Bauteil (102, 202, 304) und das zweite Bauteil (108, 206, 306) miteinander verriegelt sind,
- Ausgeben einer ersten Angabe für das erfasste Magnetfeld,
- Bestimmen einer Information über eine Position des mindestens einen magnetfeldbasierten Gegenelements (110, 112, 208, 318) relativ zum mindestens einen magnetfeldbasierten Sensorelement (104, 106, 204, 316, 400) auf der Grundlage der ausgegebenen ersten Angabe,
- Definieren der Information über eine Position des mindestens einen magnetfeldbasierten Gegenelements (110, 112, 208, 318) relativ zum mindestens einen magnetfeldbasierten Sensorelement (104, 106, 204, 316, 400) als Referenzposition, und
- **dass** die Information über eine Änderung eines durch das erste Bauteil (102, 202, 304) und das zweite Bauteil (108, 206, 306) ausgebildeten Aufnahmevolumens (118, 212) auf der Grundlage eines Vergleichs von mindestens einer Information über eine Position des mindestens einen magnetfeldbasierten Gegenelements (110, 112, 208, 318) relativ zum mindestens einen magnetfeldbasierten Sensorelement (104, 106, 204, 316, 400), die nach dem Definieren der Referenzposition bestimmt worden sind, mit der Referenzposition bestimmt wird.

12. Verfahren nach Anspruch 10 oder 11,
**dadurch gekennzeichnet,**
- **dass** ein Verriegelungszustand des ersten Bauteils (102, 202, 304) mit dem zweiten Bauteil (108, 206, 306) erfasst wird,
- **dass** das Magnetfeld des mindestens einen magnetfeldbasierten Gegenelements (110, 112, 208, 318) zu einem ersten Zeitpunkt durch das mindestens eine magnetfeldbasierte Sensorelement (104, 106, 204, 316, 400) erfasst wird,
- **dass** eine erste Angabe für das erfasste Magnetfeld ausgegeben wird,
- **dass** die erste Angabe für das erfasste Magnetfeld als Referenzangabe gespeichert wird,
- **dass** eine Information über eine Bewegungstoleranz für den Verriegelungszustand abgerufen wird, und
- **dass** auf der Grundlage der Referenzangabe und auf der Grundlage der Bewegungstoleranz ein Toleranzbereich für eine Änderung des Aufnahmevolumens (118, 212) bestimmt wird.

13. Verfahren nach Anspruch 12,
**dadurch gekennzeichnet,**
- **dass** das Magnetfeld des mindestens einen magnetfeldbasierten Gegenelements (110, 112, 208, 318) zu einem zweiten Zeitpunkt durch das mindestens eine magnetfeldbasierte Sensorelement (104, 106, 204, 316, 400) erfasst wird,
- **dass** eine zweite Angabe für das erfasste Magnetfeld ausgegeben wird, und
- **dass** auf der Grundlage der zweiten Angabe für das erfasste Magnetfeld und auf der Grundlage des Toleranzbereichs eine Information für die Steuerung der Gefäßanordnung (100, 200, 300) oder eine Information für die Steuerung des Küchengeräts (302) bestimmt wird.

14. Verfahren nach einem der Ansprüche 10 bis 13,
**dadurch gekennzeichnet,**
**dass** mindestens ein Steuerungsparameter für einen Zubereitungsvorgang an der Gefäßanordnung (100, 200, 300) oder am Küchengerät (302) in Abhängigkeit von mindestens einem Element aus der Liste automatisch angepasst wird: die Information über eine Änderung des Aufnahmevolumens (118, 212), die Information über eine Position des mindestens einen magnetfeldbasierten Gegenelements (110, 112, 208, 318) relativ zum mindestens einen magnetfeldbasierten Sensorelement (104, 106, 204, 316, 400), die mindestens eine Angabe für das erfasste Magnetfeld, die Referenzangabe, eine Erfassungshistorie, eine Positionshistorie, der Toleranzbereich für eine Änderung des Aufnahmevolumens (118, 212).

15. Maschinenlesbares Speichermedium mit Programmanweisungen, die, wenn sie durch einen Prozessor einer Gefäßanordnung (100, 200, 300) für ein Küchengerät (302), insbesondere einer Gefäßanordnung (100, 200, 300) nach einem der Ansprüche 1 bis 8, oder durch den Prozessor eines Küchengeräts (302) mit einer Gefäßanordnung (100, 200, 300) nach einem der Ansprüche 1 bis 9 ausgeführt werden, die Gefäßanordnung (100, 200, 300) oder das Küchengerät (302) dazu veranlassen, ein Verfahren nach einem der Ansprüche 10 bis 14 durchzuführen.
